# EUROPEAN PATENT APPLICATION

(11) **EP 4 113 300 A1**
(43) Date of publication of application: **04.01.2023**
(21) Application number: 20924693.3
(22) Date of filing: 10.03.2020
(51) Int. Cl.: G06F 9/50, H04W 28/00

(54) **MODEL COORDINATION METHOD AND APPARATUS**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN); LI, Haitao, Dongguan, Guangdong 523860 (CN)
(74) Representative: Taor, Simon Edward William
(86) International application number: PCT/CN2020/078609
(87) International publication number: WO 2021/179165

(57) **Abstract**

Provided are a model coordination method and apparatus. The method is applied to a first device, wherein at least one model fragment is stored in the first device so as to realize some functions of a pre-set model. The method comprises: determining a first model fragment from among at least one model fragment stored in a first device, wherein when the first model fragment is executed and a second model fragment is executed in a second device, some or all of the functions of the pre-set model are realized; the second model fragment is one of at least one model fragment stored in the second device; and the at least one model fragment stored in the second device is used for realizing some functions of the pre-set model. By means of the method, when a model is divided for execution in multiple devices, the coordination of model fragments between the devices can be ensured.

## Description

### TECHNICAL FIELD

The present disclosure relates to the artificial intelligence technology field, and more particularly to a model coordination method and apparatus.

### BACKGROUND

With the development of artificial intelligence and big data analysis technology, artefact intelligence (referred to as AI)/machine learning (referred to as ML) has been widely used in the intelligent data analysis field. In the mobile communication field, AI/ML models are increasingly introduced to perform intelligent operations, such as speech recognition and image processing, so that mobile terminals can serve more business scenarios.

Execution of the AI/ML models has high requirements on devices. Due to limitations of computing ability and storage capacity of a mobile terminal, the AI/ML models can be divided into multiple model segments. Some of the model segments can be transferred to other devices. Multiple devices jointly complete the execution of the AI/ML models, thereby sharing a computing workload of the mobile terminal. However, since there are multiple ways to divide the AI/ML models into the model segments, the model segments cannot be coordinated among various devices. Accordingly, effect of model execution is not ideal.

### SUMMARY OF DISCLOSURE

Embodiments of the present disclosure provide a model coordination method and apparatus to solve a coordination problem of model segments in multiple devices when a model is divided into multiple model segments and configured on the multiple devices for common execution.

In a first aspect, an embodiment of the present disclosure provides a model coordination method for a first device. The first device stores at least one model segment. The at least one model segment is configured to realize a part of functions of a preset model. The method includes:

determining a first model segment from the at least one model segment stored in the first device, wherein when the first model segment is executed and a second model segment is executed by a second device, a part of or all the functions of the preset model are realized, the second model segment is one of at least one model segment stored in the second device, and the at least one model segment stored in the second device is configured to realize a part of the functions of the preset model.

In a second aspect, an embodiment of the present disclosure provides a model coordination method for a third device. The method includes:
determining a first model segment, wherein the first model segment is one of at least one model segment stored in a first device, and a part of functions of a preset model is realized when the first model segment is executed by the first device; and
sending a first identification of the first model segment to the first device.

In a third aspect, an embodiment of the present disclosure provides a model coordination method for a model control function. The method includes:
determining a first model segment of a first device, wherein the first model segment is one of at least one model segment stored in the first device;
determining a second model segment of a second device, wherein the second model segment is one of at least one model segment stored in the second device, and a part of or all functions of a preset model are realized when the first model segment is executed by the first device and the second model segment is executed by the second device; and
sending a second identification of the second model segment to the second device.

In a fourth aspect, an embodiment of the present disclosure provides a model coordination apparatus including:
a determining module configured to determine a first model segment from at least one model segment stored in a first device, wherein the first device is configured to store the at least one model segment for realizing a part of functions of a preset model, a part of or all functions of the preset model are realized when the first model segment is executed and a second model segment is executed by a second device, the second model segment is one of at least one model segment stored in the second device, and the at least one model segment stored in the second device is configured to realize a part of the functions of the preset model.

In a fifth aspect, an embodiment of the present disclosure provides a model coordination apparatus including:
a determining module configured to determine a first model segment, wherein the first model segment is one of at least one model segment stored in a first device, and a part of functions of a preset model are realized when the first model segment is executed by the first device; and
a sending module configured to send a first identification of the first model segment to the first device.

In a sixth aspect, an embodiment of the present disclosure provides a model coordination apparatus including:
a first processing module configured to determine a first model segment of a first device, wherein the first model segment is one of at least one model segment stored in the first device;
a second processing module configured to determine a second model segment of a second device, wherein the second model segment is one of at least one model segment stored in the second device, and a part of or all functions of a preset model are realized when the first model segment is executed by the first device and the second model segment is executed by the second device; and
a sending module configured to send a second identification of the second model segment to the second device.

In a seventh aspect, an embodiment of the present disclosure provides a model coordination apparatus including: a transceiver, a memory, and a processor;
wherein the memory is configured to store program instructions; and
the processor is configured to execute the program instructions stored in the memory to control the processor to execute any one model coordination method in the first aspect or control the processor to execute any one model coordination method in the second aspect.

In an eighth aspect, an embodiment of the present disclosure provides a model coordination apparatus including: a transceiver, a memory, and a processor;
wherein the memory is configured to store program instructions; and
the processor is configured to execute the program instructions stored in the memory to control the processor to execute any one model coordination method in the third aspect.

In a ninth aspect, an embodiment of the present disclosure provides a computer-readable storage medium. Computer-executable instructions are stored in the computer-readable storage medium. The computer-executable instructions are executed by a processor to implement any one model coordination method in the first aspect, the second aspect, or the third aspect.

In the model coordination method provided by the embodiment of the present disclosure, the first device determines the first model segment from the at least one stored model segment. When the first model segment is executed and the second model segment is executed by the second device, the part of or all the functions of the preset model are realized, thereby realizing effective coordination of the model segments in the devices.

### BRIEF DESCRIPTION OF DRAWINGS

FIG. 1 illustrates an architecture diagram of a network system adapted for an embodiment of the present disclosure.
FIG. 2 illustrates a schematic diagram of dividing a model provided by an embodiment of the present disclosure.
FIG. 3 illustrates a schematic diagram of an application scenario provided by an embodiment of the present disclosure.
FIG. 4 illustrates a schematic flowchart of the model coordination method provided by an embodiment of the present disclosure.
FIG. 5 illustrates a schematic diagram of a model identification provided by an embodiment of the present disclosure.
FIG. 6 illustrates a signaling diagram 1 of the model coordination method provided by an embodiment of the present disclosure.
FIG. 7 illustrates a schematic diagram 1 of a model coordination provided by an embodiment of the present disclosure.
FIG. 8 illustrates a signaling diagram 2 of the model coordination method provided by an embodiment of the present disclosure.
FIG. 9 illustrates a schematic diagram 2 of a model coordination provided by an embodiment of the present disclosure.
FIG. 10 illustrates a signaling diagram 3 of the model coordination method provided by an embodiment of the present disclosure.
FIG. 11 illustrates a schematic diagram 3 of a model coordination provided by an embodiment of the present disclosure.
FIG. 12 illustrates a signaling diagram 4 of the model coordination method provided by an embodiment of the present disclosure.
FIG. 13 illustrates a schematic diagram 4 of a model coordination provided by an embodiment of the present disclosure.
FIG. 14 illustrates a schematic flowchart of a model coordination method provided by an embodiment of the present disclosure.
FIG. 15 illustrates a schematic flowchart of a model coordination method provided by an embodiment of the present disclosure.
FIG. 16 illustrates a schematic structural diagram 1 of a model coordination apparatus provided by an embodiment of the present disclosure.
FIG. 17 illustrates a schematic structural diagram 2 of a model coordination apparatus provided by an embodiment of the present disclosure.
FIG. 18 illustrates a schematic structural diagram 3 of a model coordination apparatus provided by an embodiment of the present disclosure.
FIG. 19 illustrates a schematic structural diagram of a model coordination apparatus provided by an embodiment of the present disclosure.
FIG. 20 illustrates a schematic structural diagram of a model coordination apparatus provided by an embodiment of the present disclosure.

### DETAILED DESCRIPTION OF EMBODIMENTS

In order to facilitate understanding, concepts involved in the present disclosure are first explained.

A terminal device can be a device which has a wireless transceiver function and can cooperate with a network device to provide communication services for a user. Specifically, the terminal device can refer to a user equipment (UE), an access terminal, a subscriber unit, a subscriber station, a mobile radio station, a mobile station, a remote station, a remote terminal, a mobile device, a user terminal, a terminal, a wireless communication device, a user agent, or a user device. For example, the terminal device can be a cellular phone, a cordless phone, a session initiation protocol (SIP) phone, a wireless local loop (WLL) station, a personal digital assistant (PDA), a handheld device with wireless communication ability, a computing device, or a processing devices connected to a wireless modem, an in-vehicle device, a wearable device, or a terminal device of a public land mobile network (PLMN) in a future 5G network or future evolutions after 5G The embodiment of the present disclosure is not limited thereto.

As an example and not a limitation, in embodiments of the present disclosure, the terminal device can also be a wearable device. The wearable device can also be called a wearable smart device, which is a general term for intelligent design of daily wear and development of wearable devices using wearable technology, such as glasses, gloves, a watch, clothing, or shoes. A wearable device is a portable device which is worn directly on a body or integrated into a user's clothing or accessories. The wearable device is not only a hardware device, but also realizes a powerful function through software support, data interaction, and cloud interaction. In a broad sense, the wearable smart device is full-featured and large-size, can realize, without relying on a smart phone, complete or partial functions, such as a smart watch or smart glasses, or only focuses on a certain type of application function, which needs to cooperate with other devices (such as a smart phone), such as, various kinds of smart bracelets or smart jewelry for physical sign monitoring.

Furthermore, in the embodiments of the present disclosure, the terminal device can also be a terminal device in an internet of things (IoT) system. IoT is an important part in the future development of information technology and its main technical feature is that things are connected to a network through communication technology, so as to realize an intelligent network of human-machine interconnection and interconnection of things. In the embodiments of the present disclosure, IOT technology can achieve massive connections, deep coverage, and terminal power saving through, for example, a narrow band NB technology.

A network device can be a device used for communicating with a terminal device. For example, it can be a base transceiver station (BTS) in a global system for mobile communication (GSM) or a code division multiple access (CDMA) communication system, or can be a Node B (NB) in a wideband code division multiple access (WCDMA) system, or can be an evolutionary Node B (eNB or eNodeB) in an LTE system. Alternatively, the network device can also be a relay station, an access point, an in-vehicle device, a wearable device, a network-side device in a future 5G network or after 5G, or a network device in a public land mobile network (PLMN) in future evolutions.

The network device involved in the embodiments of the present disclosure can also be referred to as a radio access network (RAN) device. The RAN device is connected to a terminal device and is configured to receive data of the terminal device and transmit the same to a core network device. The RAN device corresponds to different devices in different communication systems. For example, in a 2G system, it corresponds to a base station and a base station controller. In a 3G system, it corresponds to a base station and a radio network controller (RNC). In a 4G system, it corresponds to an evolutional Node B (eNB). In a 5G system, it corresponds to the 5G system, such as an access network device in NR, such as a gNB, a central unit (CU), or a distribution unit (DU).
AS: Access Stratum, access layer.
NAS: None Access Stratum.
RRC: Radio Resource Control.

The relevant technical background of the present disclosure is described as follows.

With the development of artificial intelligence and big data analysis technology, AI/ML models have begun to be widely used in intelligent data analysis. In the communication field, the terminal device introduces the AI/ML models to perform intelligent operations more and more, such as speech recognition, image processing, and user behavior prediction, so that the terminal device can serve more business scenarios.

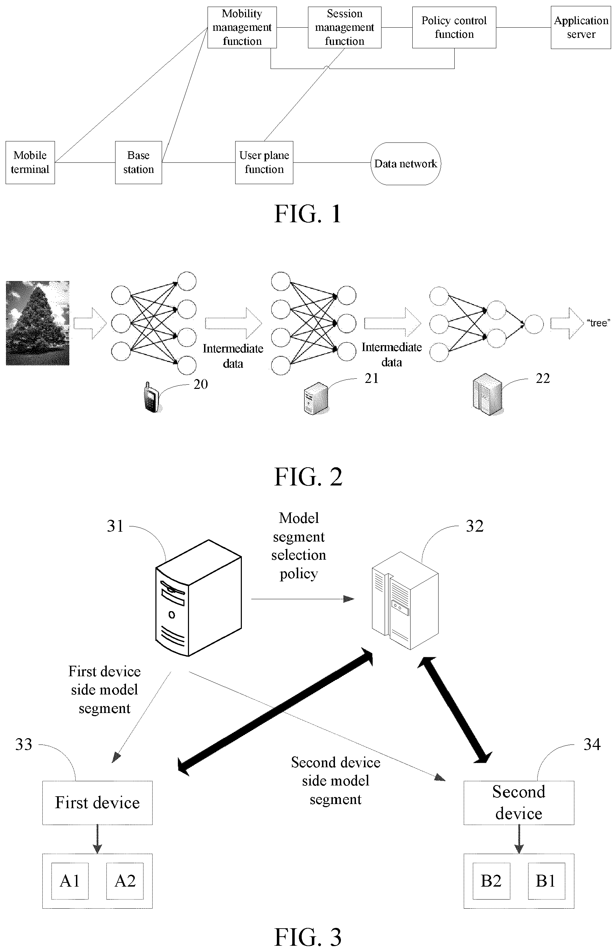

FIG. 1 illustrates an architecture diagram of a network system adapted for an embodiment of the present disclosure. As shown in FIG. 1, the network architecture can be a 5G network architecture. The 5G system is also referred to as a new wireless communication system, a new access technology (new radio, NR), or a next-generation mobile communication system.

The access network in the 5G system can be a radio access network (R)AN. An (R)AN device in the 5G system can be constituted by multiple 5G-(R)AN nodes. The (R)AN nodes can include: a non-3GPP access network such as an access point (AP) of a WiFi network or a next-generation base station (which may be collectively referred to as a new-generation radio access network node (NG-RAN node), wherein the next-generation base station includes a new air interface base station (NR nodeB, gNB), a new generation evolved base station (NG-eNB), a central unit (CU), a distributed unit (DU), a gNB with a separate form, etc.), a transmission receive point (TRP), a transmission point (TP), or other nodes.

As shown in FIG. 1, a 5G core network (5G core/new generation core, 5GC/NGC) includes multiple functional units including an access and mobility management function (AMF) network element, a session management function (SMF) network element, a user plane function (UPF) network element, an authentication server function (AUSF) network element, a policy control function (PCF) network element, an application function (AF) network element, a unified data management function (UDM) network element, a network slice selection function (NSSF) network element and so on.

The AMF network element is mainly responsible for mobility management, access management, and so on. The SMF network element is mainly responsible for session management, UE address management and allocation, dynamic host configuration protocol function, user plane function selection and control and so on. The UPF is mainly responsible for external connection to a data network (DN), data packet routing and forwarding of a user plane, packet filtering, performing related control functions of quality of service (QoS), and so on. The AUSF is mainly responsible for an authentication function of a terminal device. The PCF network element is mainly responsible for providing a unified policy framework for network behavior management, providing policy rules for control plane functions, acquiring registration information related to policy decisions, and so on. It should be noted that these functional units can work independently, or can be combined to implement certain control functions, such as access control and mobility management functions (for example, access authentication, security encryption, and location registration of the terminal device), and session management functions (for example establishment, release, and modification of a user plane transmission path.

Further, in the network architecture diagram exemplified in FIG. 1, a model control function is further provided. The model control function is a network element in the core network device, which is configured to control coordination of model segments when the model segments are jointly executed between various devices. The model control function can be a new network element in the core network device, or the coordination control of model segments by the model control function can be integrated into a certain network element in the current core network device, such as the AMF network element, the SMF network element, or the like. In this case, the network element which integrates the coordination control of the model segments is the model control function in the embodiment of the present disclosure.

The functional units in the 5GC can communicate through a next generation network (NG) interface. For example, a UE can perform transmission of control plane messages with the AMF network element through an NG interface 1 (N1 for short). An RAN device can establish a user plane data transmission channel with the UPF through an NG interface 3 (N3 for short). An AN/RAN device can establish a control plane signaling connection with the AMF network element through an NG interface 2 (N2 for short). The UPF can communicate with the AMF network element through an NG interface 4 (N4 for short). The UPF can exchange user plane data with a data network DN through NG interface 6 (N6 for short). The AMF network element can exchange information with the SMF network element through an NG interface 11 (N11 for short). The AMF network element can exchange information with the PCF network element through an NG interface 7 (N7 for short). The AMF network element can exchange information with the AUSF through an NG interface 12 (N12 for short). It should be noted that FIG. 1 is only an exemplary architecture diagram. Besides the functional units shown in FIG. 1, the network architecture can further include other functional units.

The network architecture shown in FIG. 1 is a reference point-based network architecture, and the network architecture is a network architecture in a non-roaming scenario. Certainly, a method of the present disclosure can also be applied in a roaming scenario, and the network architecture is not limited to a reference point-based network architecture. The network architecture can also adopt a network architecture based on service interfaces.

In the above-mentioned system architecture, since the terminal device has limitations of in terms of computing power, storage capacity, and battery capacity and the AI/ML model has higher device requirements, ability of the terminal device is a bigger challenge when the terminal device is used for running the AI/ML model independently. Even if the terminal device can complete execution of the AI/ML model independently, it may take a long time. Based on this, the AI/ML model can be divided into two or more model segments, and the corresponding segments are executed by two or more devices respectively. For example, some model segments can be divided into the network device, and the AI/ML model can be jointly executed by the network device and the terminal device.

FIG. 2 illustrates a schematic diagram of dividing a model provided by an embodiment of the present disclosure. As shown in FIG. 2, it is directed to divide an AI/ML model. The AI/ML model is an image recognition model capable of recognizing things in images. In the embodiment of the present disclosure, it is assumed that the model has been pre-trained. In FIG. 2, the image recognition model is divided into three model segments, which are respectively configured on three devices for execution. As shown in FIG. 2, the three devices are a terminal device 20, a first device 21, and a second network device 22 respectively, and each device only executes its own model segment.

When the model segments executed by the three devices are coordinated, any one or two of the devices can realize some functions of the image recognition model. After the three devices execute their respective model segments, all functions of the image recognition model can be achieved. For example, in FIG. 2, an obtained output of the model is "tree", which means that after an image is outputted and processed by the model, the model recognizes that a thing in the image is a tree.

It can be understood that an image recognition model may include multiple different parts, for example, may include multiple convolutional layers, multiple pooling layers, multiple upsampling layers, multiple downsampling layers, and so on. Various parts in the model are arranged organically, and each part may output an intermediate result after data is inputted data. A result outputted by a previous part may be an input of a next part. Accordingly, as shown in FIG. 2, after the terminal device 20 executes a corresponding model segment, an obtained output is an intermediate result. The intermediate result is an input of a model segment executed by the first network device 21.

First, based on this, the model segments executed by the devices are in sequence. For example, in FIG. 2, the network device 21 can execute its corresponding model segment and obtain the corresponding intermediate data only when the terminal device 20 finishes executing its model segment and obtain the intermediate result to be the input of the first network device 21. Then, the intermediate data outputted by the first network device 21 is an input of a model segment executed by the second network device 22.

Second, based on differences in computing capabilities of the terminal devices in different scenarios, the models can be divided in different methods. The coordination between models cannot be achieved when the model segments are executed between the devices.

For example, it is assumed that the image recognition model in FIG. 2 is constituted by a preprocessing layer - a convolutional layer - an upsampling layer - a convolutional layer - a pooling layer -a convolutional layer - an activation layer - a full-connection layer. For example, the dividing method can be one as follows.

In a first method, a model segment A1 includes the preprocessing layer - the convolutional layer, a model segment B1 includes the upsampling layer - the convolutional layer - the pooling layer, and a model segment C1 includes the convolutional layer - the activation layer - the full connection layer.

In a second method, a model segment A2 includes the preprocessing layer, a model segment B2 includes the convolutional layer - the upsampling layer - the convolutional layer - the pooling layer, and a model segment C2 includes the convolutional layer - the activation layer - the full connection layer).

In a third method, a model segment A3 includes the preprocessing layer - the convolutional layer - the upsampling layer, a model segment B3 includes the convolutional layer - the pooling layer - the convolutional layer - the activation layer, and a model segment C3 includes the full connection layer.

Based on the above-mentioned three dividing methods, the model segment A1, the model segment A2, and the model segment A3 can be configured on the terminal device 20, the model segment B1, the model segment B2, and the model segment B3 can be configured on the first network device 21, and the model segment C1, the model segment C2, and the model segment C3 are configured on the second network device 22.

However, due to the multiple methods of dividing the models, dividing and coordination between models is a problem. For example, when a model segment which is selected for execution by the terminal device 20 is A1, a model segment which is possibly selected for execution by the first network 21 is B2 and a model segment which is possibly selected for execution by the second network 22 is C3. In this case, the whole model executed by the three devices is the preprocessing layer - the convolutional layer - the convolutional layer - the upsampling layer - the convolutional layer - the pooling layer - the fully connected layer, which is different from the original image recognition model.

Certainly, when the model is divided by only one method, for example, only the first division method is included, each device only includes one model segment of the image recognition model. The execution of the model can ensure coordination. However, only one method cannot meet requirements of various application scenarios. For example, the model is divided into a model segment A (80% of the model), a model segment B (10% of the model), and a model segment C (10% of the model), and they are configured on the terminal device 20, the first network device 21, and the second network device 22, respectively. At this time, it is assumed that power of the terminal device 20 is low. When the terminal device 20 executes the model segment A, the power at this time is not sufficient to support the terminal device 20 to complete the execution of the model segment A. If another dividing method is included at this time, the model is divided into a model segment D (10% of the model), a model segment E (30% of the model), and a model segment F (60% of the model), and they are configured to the terminal device 20, the first network device 21, and the second network device 22, respectively. The terminal device 20 can choose to execute the model segment D when the power is low.

Accordingly, multiple dividing methods of the model are necessary. However, in the present disclosure, it is necessary to solve a problem of how to ensure that after the terminal device 20 selects the model segment A1, the model segment selected for execution by the first network device 21 is B1 and the model segment selected for execution by the second network device 22 is C1.

First, an application scenario of the present disclosure is introduced.

FIG. 3 illustrates a schematic diagram of an application scenario provided by an embodiment of the present disclosure. As shown in FIG. 3, a cloud simulation server 31, a model control function 32, a first device 33, and a second device 34 are included. An AI/ML model has been trained. The cloud model server 31 is configured to divide the AI/ML model in multiple methods to form different model segment sets and configure the same on multiple AI/ML model endpoints. The AI/ML model endpoints are devices executing model segments in the AI/ML model. For example, after the AI/ML model endpoints are divided into model segments and the model segments are configured on the first device 33 and the second device 34 respectively, the first device 33 and the second device 34 are the AI/ML model endpoints.

The AI/ML model is divided by multiple methods. FIG. 3 illustrates two dividing methods. The AI/ML model is divided into a model segment A1 + a model segment B1. Alternatively, the AI/ML model can also be divided into a model segment A2 + a model Segment B2. Then, the model segment A1 and the model segment A2 are configured on the first device 33, and the model segment B1 and the model segment B2 are configured on the second device 34.

When a model segment determined to be executed by the first device 33 is the model segment A1, a model segment required to be executed by the second device 34 is the model segment B1. When a model segment determined to be executed by the first device 33 is the model segment A2, a model segment required to be executed by the second device 34 is the model segment B2. In the embodiment of the present disclosure, the above-mentioned selection scheme is guaranteed by a model segment selection policy. The model segment selection policy is determined by the cloud simulation server 31. The cloud simulation server 31 can configure the model segment selection policy on the model control function 32 or configure the model segment selection policy on the first device 33 or the second device 34.

Then, the model segment of each of the devices determined to be execute is possibly determined by the first device 33, the second device 34, or the model control function 32.

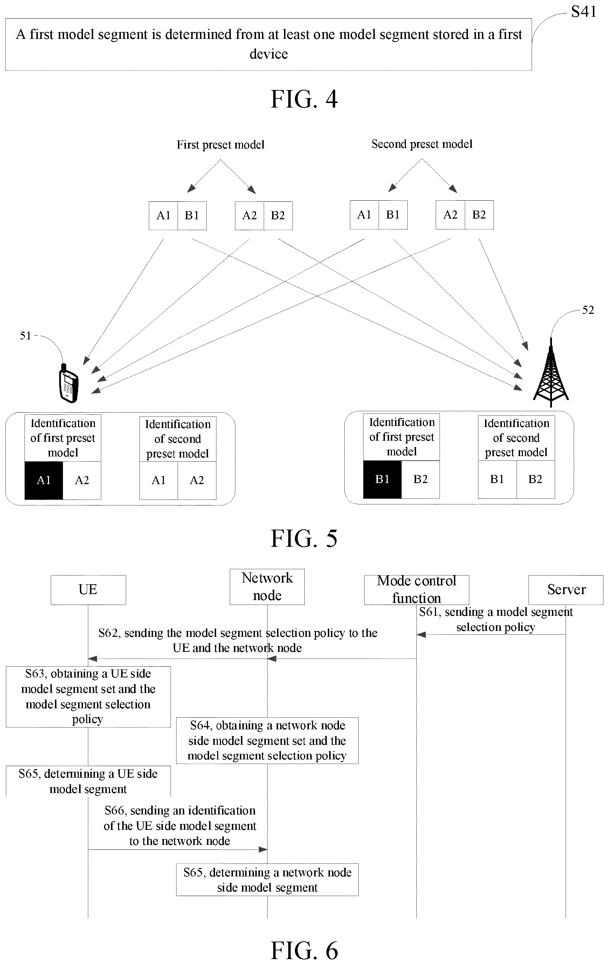

On the basis of the above-mentioned contents, a model coordination method provided by the present disclosure will be described below in combination with FIG. 4. FIG. 4 illustrates a schematic flowchart of the model coordination method provided by an embodiment of the present disclosure. As shown in FIG. 4, the method includes the following steps.

In S41, a first model segment is determined from at least one model segment stored in a first device.

The first device stores at least one model segment, and the second device also stores at least one model segment. When the first device determines the first model segment from the at least one stored model segment, the second device determines a second model segment from the at least one stored the model segment. The first model segment and the second model segment are parts of a preset model. When the first device executes the first model segment and the second device executes the second model segment, a part of or all functions of the preset model are realized. The first device can be a terminal device or a network device, and the second device can also be a terminal device or a network device.

The model segments stored in the first device and the second device can be prestored in the first device and the second device respectively after the preset model is divided. The preset model can be divided by multiple methods. For example, the preset model can be divided into a model segment A1 and a model segment B1. The preset model can also be divided into a model segment A2 and a model segment B2. The model segment A1 and the model segment A2 are model segments of the first device side and can be stored in the first device. The model segment B1 and the model segment B2 are model segments of the second device and can be stored in the second device.

The model segment A1 and the model segment B1 are matched. When the model segment A1 and the model segment B1 are executed, all functions of the preset model can be realized. The model segment A2 and the model segment B2 are matched. When the model segment A2 and the model segment B2 are executed, all the functions of the preset model can be realized. A solution implemented by the present disclosure is that when the first device selects the model segment A1, a model segment selected by the second device is B1, and when the first device selects the model segment A2, a model segment selected by the second device is B2, thereby implementing coordination and dividing of the model. When the preset model is divided into two model segments and the two model segments are executed by the first device and the second device respectively, all the functions of the preset model are realized. When the preset model is divided into more than two model segments and respective model segments are executed by the first device and the second device respectively, a part of the functions of the preset model are realized.

In the model coordination method provided by the embodiment of the present disclosure, the first device determines the first model segment from the at least one stored model segment. When the first model segment is executed and the second model segment is executed by the second device, the part of or all the functions of the preset model are realized, thereby realizing effective coordination of the model.

In the embodiment of the present disclosure, the preset model is a model which has been trained. An AI/ML model is taken as the preset model as an example. After training of the AI/ML model is completed, a cloud model server in a data network can divide the AI/ML mode by multiple methods to form different model segments and configure the same on multiple AI/ML endpoints for execution. The AI/ML endpoints in the embodiment of the present disclosure are devices which execute the AI/ML model. For example, when the preset model is the AI/ML, the first device and the second device are AI/ML endpoints, and the first device and the second device are opposite AI/ML endpoints for each other.

Optionally, the first device is a first terminal device or a first network device, and the second device is a second terminal device or a second network device. The first network device can be a base station or a core network device, and the second network device can be a base station or a core network device.

For example, one AI/ML endpoint is a mobile terminal, and the other AI/ML endpoint is a network node in a mobile network including but not limited to a core network node or a base station. The core network node includes but is not limited to a mobility management function, a session management function, a user plane function, or a dedicated network data analysis node in a core network.

In a possible implementation manner, a method of determining the first model segment is that first information is obtained, and then the first model segment is determined from the at least one model segment stored in the first device according to the first information. The first information includes at least one of a model segment selection policy and a first identification of the first model segment. The model segment selection policy includes a corresponding relationship between a model segment selection condition and the at least one model segment stored in the first device. When the first information includes the model segment selection policy, the first model segment can be determined according to the corresponding relationship between the model segment selection condition and the at least one model segment stored in the first device. When the first information includes the first identification of the first model segment, the first model segment can be directly determined according to the first identification.

When the first information includes the model segment selection policy, optionally, the model segment selection policy further includes an identification of the preset model. Accordingly, the at least one model segment of the preset model stored in the first device can be determined according to the identification of the preset model. FIG. 5 illustrates a schematic diagram of a model identification provided by an embodiment of the present disclosure. As shown in FIG. 5, a first preset model and a second preset model are included. The first preset model can be divided into a model segment A1 + a model segment B1 or can also be divided into a model segment A2 + a model segment B2. The second preset model can be divided into a model segment A1 + a model segment B1 or can also be divided into a model segment A2 + a model segment B2. Then, the model segment A1 of the first preset model and the model segment A1 of the second preset model are configured on a terminal device 51, and the model segment B1 of the first preset model and the model segment B1 of the second preset model are configured on a network device 52.

In FIG. 5, the terminal device 51 can be the first device, or the network device 52 can be the first device. The terminal device 51 is taken as the first device as an example. The two stored model segments are the model segments A1 but belong to two different preset models. At this time, it is necessary to determine which model segment A1 based on the identification of the preset model included in the model segment selection policy. For example, when the first preset model needs is required to be executed, the model segment selection policy can include the identification of the first preset model. Then, according to the identification of the first preset model, the terminal device 51 can learn that the determined first model segment is the model segment A1 of the first preset model.

Optionally, after the first device determines the first model segment according to the model segment selection policy, the first device can send the first identification of the first model segment to the second device, and the second device can determine the second model segment according to the first identification and the model segment selection policy. The model segment selection policy includes the corresponding relationship between the model segment selection condition and the at least one model segment stored in the first device.

The first device can also send the first identification of the first model segment to a model control function after determining the first model segment according to the model segment selection policy, and the model control function determines the second model segment for the second device according to the first identification and the model segment selection policy, and sends a second identification of the second model segment to the second device. The model segment selection policy includes a corresponding relationship between the model segment selection condition and the at least one model segment stored in the second device.

The first device can also determine the first model segment according to the model segment selection policy, determine the second model segment for the second device according to the model segment selection policy, and send the second identification of the second model segment to the second device. As a result, after receiving the second identification, the second device determines the second model segment. The model segment selection policy further includes the corresponding relationship between the model segment selection condition and the at least one model segment stored in the second device.

When the second device determines the second model segment, the second device can send the second identification of the second model segment to the first device, and the first device determines the first model segment according to the second identification and the model segment selection policy. The model segment selection policy includes the corresponding relationship between the model segment selection condition and the at least one model segment stored in the first device.

The second device can also send the second identification of the second model segment to the model control function, and the model control function determines the first model segment for the first device according to the model segment selection policy and the second identification, and sends the first identification of the first model segment to the first device. The first device determines the first model segment according to the first identification. The model segment selection policy includes the corresponding relationship between the model segment selection condition and the at least one model segment stored in the first device.

After determining the second model segment according to the model segment selection policy, the second device can also determine the first model segment for the first device according to the model segment selection policy and send the first identification of the first model segment to the first device. As a result, after receiving the first identification, the first device determines the first model segment. The model segment selection policy further includes the corresponding relationship between the model segment selection condition and the at least one model segment stored in the first device.

In the embodiment of the present disclosure, when the model segment selection policy is stored in the first device or the second device, the model segment selection policy stored in the first device is received from the model control function, and the model segment selection policy stored in the second device is also received from the model control function. In all embodiments of the present disclosure, A sending certain information to B, A receiving information of B, or A receiving certain information from B mean that sending of certain information is from A to B or from B to A, but do not mean that the certain information is sent directly from A to B or is sent directly from B to A. The first device can be a first terminal device or a first network device, the second device can be a second terminal device or a second network device, and the network device can also be a base station or a core network device. Accordingly, it is necessary to determine a specific sending method according to actual types of the devices.

For example, the first device receives the model segment selection policy from the model control function. When the first device is a terminal device, the model control function is a network element in a core network, and data transmission between the two needs a radio access network device, such as a base station, for forwarding. At this time, when the first device receives the model segment selection policy from the model control function, it means that the model segment selection policy received by the first device comes from the model control function, but it does not mean that the model segment selection policy is directly sent from the model control function.

A solution of the present disclosure will be described by taking the first device as a UE and the second device as a network node as an example. The UE can be the first device or the second device, and the network node can be the first device or the second device.

FIG. 6 illustrates a signaling diagram 1 of the model coordination method provided by an embodiment of the present disclosure. FIG. 6 includes the following steps.

In S61, a server sends a model segment selection policy to a model control function.

The model control function in the embodiment of the present disclosure is a network element in a core network device. The server sends the model segment selection policy to a UE and a network node through the model control function. The server can also directly send the model segment selection policy to the UE or the network node. In the embodiment of the present disclosure, the server sends the model segment selection policy to the UE and the network device through the model control function.

In S62, the model control function sends the model segment selection policy to the UE and the network node.

After obtaining the model segment selection policy, the model control function sends the model segment selection policy to the UE and the network node. Optionally, the model control function sends a UE side model segment selection policy to the UE, and the UE-side model segment selection policy includes a corresponding relationship between a model segment selection condition and at least one model segment stored in the UE side. The model control function sends a network node side model segment selection policy to the network node, and the network node side model segment selection policy includes a corresponding relationship between the model segment selection condition and at least one model segment stored in the network node side.

The model control function configures the model segment selection policy to the UE. This can be that the model control function sends the model segment selection policy to a mobility management function, and then the mobility management function sends the model segment selection policy to the UE through an NAS message. The model segment selection policy is included in the NAS message. It can be understood that when the mobility management function sends the NAS message to the UE, the NAS message is sent to the UE by forwarding by a radio access network device (for example, a certain base station).

In S63, the UE obtains a UE side model segment set and the model segment selection policy.

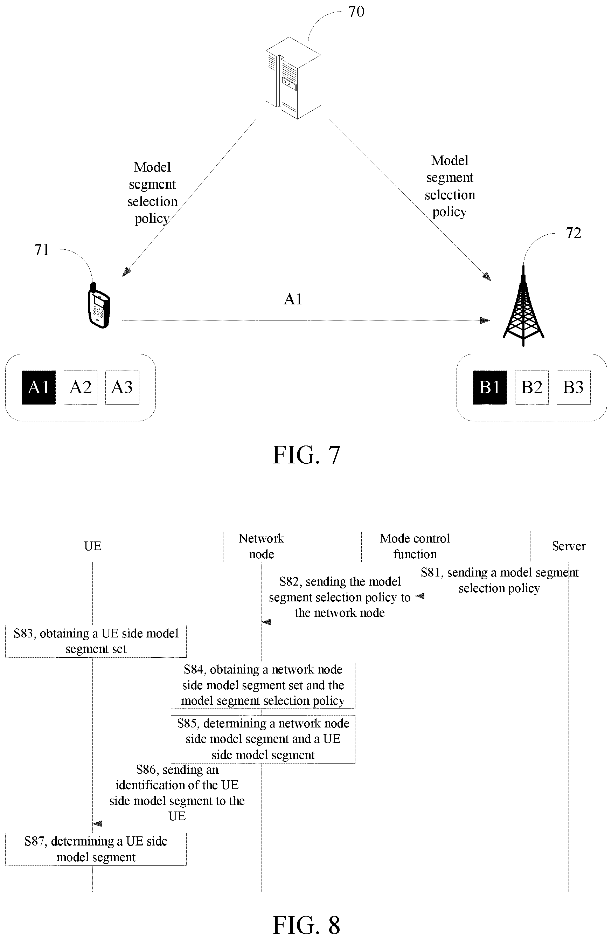

When there are multiple methods of dividing a preset model, model segments obtained by the multiple methods are respectively configured on the UE side and the network node side. FIG. 7 illustrates a schematic diagram 1 of a model coordination provided by an embodiment of the present disclosure. As shown in FIG. 7, a model control function 70, a UE 71, and a base station 72 are included. Model segments configured on the UE 71 by the server include a model segment A1, a model segment A2, and a model segment A3. Model segments configured on the network node by the server include a model segment B1, a model segment B2, and a model segment B3. The network node in FIG. 7 is the base station 72. Optionally, the network node can also be a core network device.

The model segment selection policy includes a corresponding relationship between a model segment selection condition and at least one stored model segment. The model segment selection condition can be, for example, a battery level of the UE, a location of the UE (e.g., a cell identification), and air interface signal quality of the UE. The model segment selection condition can be not only related information of the UE, but also a load of the network node, and can also be information unrelated to the first device and the second device in a current time. In the embodiment of the present disclosure, the model segment selection condition is not limited.

In S64, the network node obtains a network node side model segment set and the model segment selection policy.

The model segments in the network node side model segment set obtained by the network node and the model segments in the UE side model segment set are matched. For example, in FIG. 7, the model segment A1 and the model segment B1 are matched, the model segment A2 and the model segment B2 are matched, and the segment A3 and the model segment B3 are matched.

In S65, the UE determines a UE side model segment.

In FIG. 7, the UE 71 obtains the model segment selection policy from the model control function 70, and then determines the UE side model segment according to the model segment selection policy. For example, the model segment selection condition is a battery level of the UE. When the battery level of the UE is lower than 30%, the model segment A1 is selected. When the battery level of the UE is higher than 30% and lower than 50%, the model segment A2 is selected. When the battery level of the UE is high than 50% and lower than 100%, the model segment A3 is selected. At this time, the UE learns that its own battery level is 25%, and determines that the model segment determined to be executed is the model segment A1. When the UE is the first device, the model segment A1 is the first model segment, and A1 is the first identification of the first model segment. When the UE is the second device, the model segment A1 is the second model segment, and A1 is the second identification of the second model segment.

In S66, the UE sends an identification of the UE side model segment to the network node.

When the UE determines that the model segment to be executed is the model segment A1, it sends the identification of the model segment A1 to the network node. For example, in FIG. 7, the UE 71 sends the identification A1 to the base station 72. In the example of FIG. 7, the network node is a base station, and the UE can directly perform data transmission with the base station. Further, when the network node is a core network device, the UE can also perform the data transmission with the core network device. However, the data transmission between the UE and the core network device needs a radio access network device, such as a base station, to act as a relay node for forwarding.

When the network node is a core network device, the UE can report the identification A1 to the core network device through an NAS message. When the network node is a base station, the UE can report the identification A1 to the base station through an AS message. The AS message can be, for example, an RRC message.

In S67, the network node determines a network node side model segment.

After receiving the identification of the UE side model segment, the network node can determine the network node side model segment according to the identification of the UE side model segment and the model segment selection policy. For example, the model segment determined by the base station 72 in FIG. 7 is the model segment B1.

In the example of FIG. 6 and FIG. 7, when the UE is the first device and the network node is the second device, a model coordination scheme exemplified in FIG. 6 and FIG. 7 is that the first device obtains the model segment selection policy from the model control function, and the second device obtains the model segment selection policy from the model control function. The first device determines the first model segment (i.e., the model segment A1 in FIG. 7) according to the model segment selection policy, and then sends the first identification of the first model segment (i.e., the identification A1 in FIG. 7) to the second device. Then, the second device determines the second model segment (i.e., the model segment B1 in FIG. 7) according to the first identification and the model segment selection policy. As such, the coordination between the model segments is realized.

In the example of FIG. 6 and FIG. 7, when the network node is the first device and the UE is the second device, a model coordination scheme exemplified in Figures 6 and 7 is that the second device obtains the model segment selection policy from the model control function, and the first device obtains the model segment selection policy from the model control function. The second device determines the second model segment (i.e., the model segment A1 in FIG. 7) according to the model segment selection policy, and then sends the second identification of the second model segment (i.e., the identification A1 in FIG. 7) to the first device. Then, the first device determines the first model segment (i.e., the model segment B1 in FIG. 7) according to the second identification and the model segment selection policy. As such, the coordination between the model segments is realized.

Another solution will be described below.

FIG. 8 illustrates a signaling diagram 2 of the model coordination method provided by an embodiment of the present disclosure. FIG. 8 includes the following steps.

In S81, a server sends a model segment selection policy to a model control function.

The model control function in the embodiment of the present disclosure is a network element in a core network device. The server sends the model segment selection policy to a UE and a network node through the model control function. The server can also directly send the model segment selection policy to the UE or the network node. In the embodiment of the present disclosure, the server sends the model segment selection policy to the UE and the network device through the model control function.

In S82, the model control function sends the model segment selection policy to the network node.

After obtaining the model segment selection policy, the model control function sends the model segment selection policy to the network node. Optionally, the model control function sends a network node side model segment selection policy to the network node. The network node side model segment selection policy includes a corresponding relationship between a model segment selection condition and at least one model segment stored in the network node side.

In S83, the UE obtains a UE side model segment set.

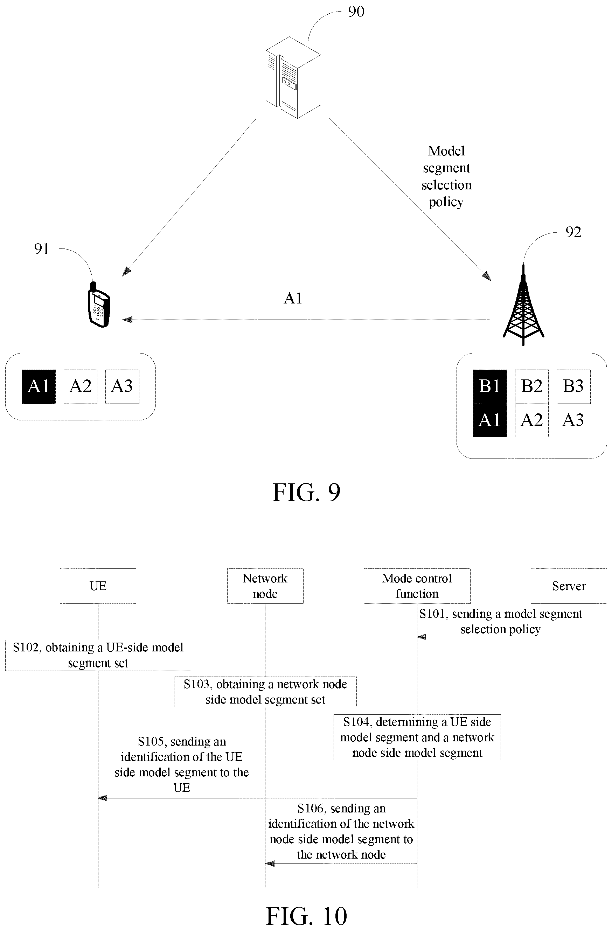

When there are multiple methods of dividing a preset model, model segments obtained by the multiple methods are respectively configured on the UE side and the network node side. FIG. 9 illustrates a schematic diagram 2 of a model coordination provided by an embodiment of the present disclosure. As shown in FIG. 9, a model control function 90, a UE 91, and a base station 92 are included. Model segments configured on the UE 91 by the server include a model segment A1, a model segment A2, and a model segment A3. Model segments configured on the network node by the server include a model segment B1, a model segment B2, and a model segment B3.

The model segment selection policy includes a corresponding relationship between a model segment selection condition and at least one stored model segment. The model segment selection condition can be, for example, a battery level of the UE, a location of the UE (e.g., a cell identification), and air interface signal quality of the UE. The model segment selection condition can be not only related information of the UE, but also a load of the network node, and can also be information unrelated to the first device and the second device in a current time. In the embodiment of the present disclosure, the model segment selection condition is not limited.

In S84, the network node obtains a network node side model segment set and the model segment selection policy.

The model segments in the network node side model segment set obtained by the network node and the model segments in the UE side model segment set are matched. For example, in FIG. 9, the model segment A1 and the model segment B1 are matched, the model segment A2 and the model segment B2 are matched, and the segment A3 and the model segment B3 are matched.

In S85, the network node determines a network node side model segment and a UE side model segment.

In FIG. 9, the base station 92 obtains the model segment selection policy from the model control function 90, and then determines a base station side model segment according to the model segment selection policy. For example, the model segment selection condition is a location of the UE. When the UE is located within coverage of a cell A, the base station 92 selects the model segment B1. When the UE is located within coverage of a cell B, the base station 92 selects the model segment B2. When the UE is located within coverage of other cells other than the cell A and the cell B, the base station 92 selects the model segment B3. At this time, when the location of the UE is located within the coverage of the cell A, the base station 92 determines that the model segment to be executed is the model segment B1. When the base station 92 is the first device, the model segment B1 is the first model segment, and B1 is the first identification of the first model segment. When the base station 92 is the second device, the model segment B1 is the second model segment, and B1 is the second identification of the second model segment.

Then, the network node determines the UE side model segment according to the network node side model segment. For example, the base station 92 determines the model segment A1 for the UE after determining the model segment B1.

In S86, the network node sends an identification of the UE side model segment to the UE.

When the network node determines that the model segment to be executed is the model segment B1 and determines the model segment A1 for the UE, it sends the identification of the model segment A1 to the UE. For example, in FIG. 9, the UE 91 sends the identification A1 to the base station 92.

Optionally, the network node in the embodiment of the present disclosure can be a base station or a core network device. When the network node is the base station, the identification A1 of the UE side model segment can be included in an AS message, and the base station sends the identification of the UE side model segment to the UE through the AS message. The AS message can be, for example, an RRC message. When the network node is the core network device, the identification A1 of the UE side model segment can be included in an NAS message, and the core network device can send the identification A1 of the UE side model segment to the UE through the NAS message.

In S87, the UE determines a UE side model segment.

After receiving the identification of the UE side model segment, the UE can determine the UE side model segment. For example, the model segment determined by the UE 92 in FIG. 9 is the model segment A1.

In the example of FIG. 8 and FIG. 9, when the UE is the first device and the network node is the second device, a model coordination scheme exemplified in FIG. 8 and FIG. 9 is that the second device obtains the model segment selection policy from the model control function. The second device determines the second model segment (i.e., the model segment B1 in FIG. 9) according to the model segment selection policy, and then determines the first model segment (i.e., the model segment A1 in FIG. 9) for the first device. Next, the second device sends the first identification of the first model segment (i.e., the identification A1 in FIG. 9) to the first device, and the first device determines the first model segment (i.e., the model segment A1 in FIG. 9) according to the first identification. As such, the coordination between the model segments is realized.

In the example of FIG. 8 and FIG. 9, when the network node is the first device and the UE is the second device, a model coordination scheme exemplified in FIG. 8 and FIG. 9 is that the second device obtains the model segment selection policy from the model control function. The second device determines the second model segment (i.e., the model segment B1 in FIG. 9) according to the model segment selection policy, and then determines the first model segment (i.e., the model segment A1 in FIG. 9) for the first device. Next, the second device sends the first identification of the first model segment (i.e., the identifier A1 in FIG. 9) to the first device, and the first device determines the first model segment (i.e., the model segment A1 in FIG. 9) according to the first identification. As such, the coordination between the model segments is realized.

In the embodiments illustrated in FIG. 6 to FIG. 9, signaling interaction is performed between two model endpoints, thereby realizing the coordination of the model segments required to be executed by each model endpoint. The following will introduce a solution in which a model control function in a mobile network is responsible for model segment coordination between model endpoints.

FIG. 10 illustrates a signaling diagram 3 of the model coordination method provided by an embodiment of the present disclosure. FIG. 10 includes the following steps.

In S101, a server sends a model segment selection policy to a model control function.

The model control function in the embodiment of the present disclosure is a network element in a core network device. The server sends the model segment selection policy to a UE and a network node through the model control function. The server can also directly send the model segment selection policy to the UE or the network node. In the embodiment of the present disclosure, the server sends the model segment selection policy to the UE and the network device through the model control function.

In S102, a UE obtains a UE-side model segment set.

In S103, a network node obtains a network node side model segment set.

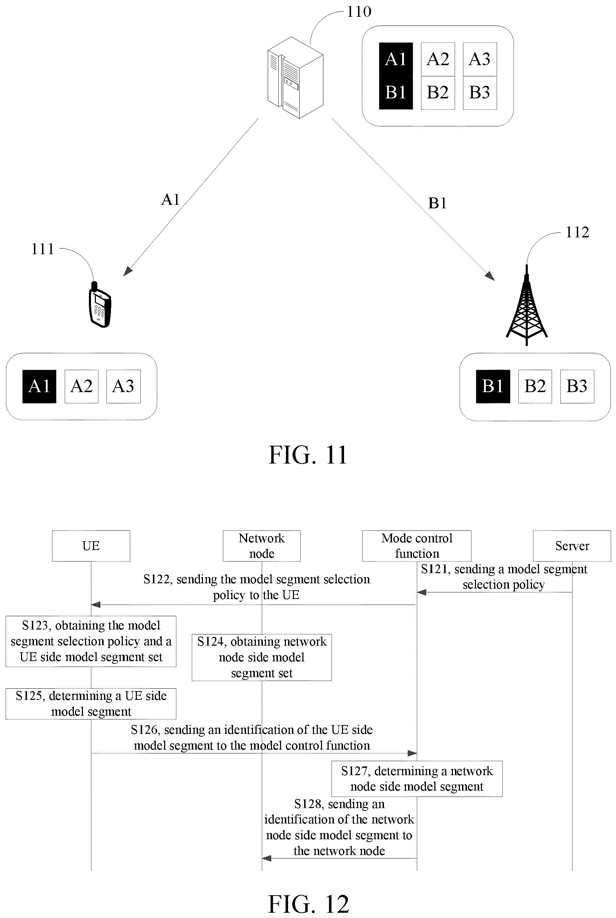

When there are multiple methods of dividing a preset model, model segments obtained by the multiple methods are respectively configured on the UE side and the network node side. FIG. 11 illustrates a schematic diagram 3 of a model coordination provided by an embodiment of the present disclosure. As shown in FIG. 11, a model control function 110, a UE 111, and a base station 112 are included. Model segments configured on the UE 111 by the server include a model segment A1, a model segment A2, and a model segment A3. Model segments configured on the network node by the server include a model segment B1, a model segment B2, and a model segment B3.

The model segment selection policy includes a corresponding relationship between a model segment selection condition and at least one stored model segment. The model segment selection condition can be, for example, a battery level of the UE, a location of the UE (e.g., a cell identification), and air interface signal quality of the UE. The model segment selection condition can be not only related information of the UE, but also a load of the network node, and can also be information unrelated to the first device and the second device in a current time. In the embodiment of the present disclosure, the model segment selection condition is not limited.

In S104, the model control function determines a UE side model segment and a network node side model segment.

The model control function is responsible for determining the model segments required to be executed by the UE and network nodes. For example, the model control function can determine to select the model segment A1 for the UE according to information, such as a location of the UE (such as a cell identification) from any other network element in a mobile network, air interface signal quality of the UE, a current time, or the like, and can select the model segment B1 for the corresponding network node. In another condition, for example, according to a condition including but not limited to a position movement of the UE or a change of air interface signaling, the model segment A2 is selected for the UE, and the model segment B2 is selected for the corresponding network node.

The model segments in the network node side model segment set obtained by the network node and the model segments in the UE side model segment set are matched. For example, in FIG. 11, the model segment A1 and the model segment B1 are matched, the model segment A2 and the model segment B2 are matched, and the segment A3 and the model segment B3 are matched.

In S105, the model control function sends an identification of the UE side model segment to the UE.

Specifically, since the model control function is the network element in the core network, the identification of the UE side model segment can be sent to a mobility management function when the model control function sends the identification of the UE side model segment to the UE. Then, the mobility management function sends the identification of the UE side model segment through an NAS message. The identification of the UE side model segment is included in the NAS message.

In S106, the model control function sends an identification of the network node side model segment to the network node.

In FIG. 11, after determining determines the model segment A1 for the UE 111 and the model segment B1 for the base station 112, the model control function 110 sends the identification A1 to the UE 111 and the identification B2 to the base station 112.

Then, the UE 111 determines a UE side model segment A1 according to the identification A1, and the base station 112 determines a network node side model segment B1 according to the identification B1.

In the example of FIG. 10 and FIG. 11, when the UE is the first device and the network node is the second device, a model coordination scheme exemplified in FIG. 10 and FIG. 11 is that the model control function determines the first model segment (i.e., the model segment A1 in FIG. 11) for the first device according to the model segment selection policy and correspondingly selects the second model segment (i.e., the model segment B1 in FIG. 11) for the second device. Then, the first identification of the first model segment is sent to the first device, and the second identification of the second model segment is sent to the second device. The first device determines the first model segment according to the first identification, and the second device determines the second model segment according to the second identification. As such, the coordination between the model segments is realized.

In the example of FIG. 10 and FIG. 11, when the network node is the first device and the UE is the second device, a model coordination scheme exemplified in FIG. 10 and FIG. 11 is that the model control function determines the second model segment (i.e., the model segment A1 in FIG. 11) for the second device according to the model segment selection policy and correspondingly selects the first model segment (i.e., the model segment B1 in FIG. 11) for the second device. Then, the second identification of the second model segment is sent to the second device, and the first identification of the first model segment is sent to the first device. The second device determines the second model segment according to the second identification, and the first device determines the first model segment according to the first identification. As such, the coordination between the model segments is realized.

Yet another solution will be described below.

FIG. 12 illustrates a signaling diagram 4 of the model coordination method provided by an embodiment of the present disclosure. FIG. 12 includes the following steps.

In S121, a server sends a model segment selection policy to a model control function.

The model control function in the embodiment of the present disclosure is a network element in a core network device. The server sends the model segment selection policy to a UE and a network node through the model control function. The server can also directly send the model segment selection policy to the UE or the network node. In the embodiment of the present disclosure, the server sends the model segment selection policy to the UE and the network device through the model control function.

In S122, the model control function sends the model segment selection policy to the UE.

After obtaining the model segment selection policy, the model control function sends the model segment selection policy to the UE. Optionally, the model control function sends a UE side model segment selection policy to the UE. The UE side model segment selection policy includes a corresponding relationship between a model segment selection condition and at least one model segment stored in the UE side.

In S123, the UE obtains the model segment selection policy and a UE side model segment set.

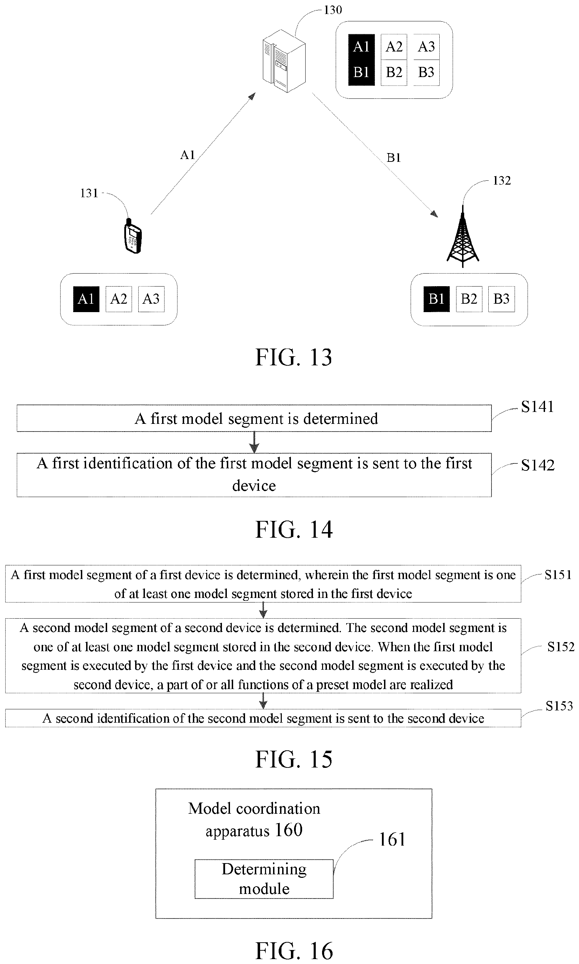

When there are multiple methods of dividing a preset model, model segments obtained by the multiple methods are respectively configured on the UE side and the network node side. FIG. 13 illustrates a schematic diagram 4 of a model coordination provided by an embodiment of the present disclosure. As shown in FIG. 13, a model control function 130, a UE 131, and a base station 132 are included. Model segments configured on the UE131 by the server include a model segment A1, a model segment A2, and a model segment A3. Model segments configured on the network node by the server include a model segment B1, a model segment B2, and a model segment B3.

The model segment selection policy includes a corresponding relationship between a model segment selection condition and at least one stored model segment. The model segment selection condition can be, for example, a battery level of the UE, a location of the UE (e.g., a cell identification), and air interface signal quality of the UE. The model segment selection condition can be not only related information of the UE, but also a load of the network node, and can also be information unrelated to the first device and the second device in a current time. In the embodiment of the present disclosure, the model segment selection condition is not limited.

In S124, the network node obtains network node side model segment set.

The model segments in the network node side model segment set obtained by the network node and the model segments in the UE side model segment set are matched. For example, in FIG. 13, the model segment A1 and the model segment B1 are matched, the model segment A2 and the model segment B2 are matched, and the segment A3 and the model segment B3 are matched.

In S125, the UE determines a UE side model segment.

The UE determines the UE side model segment according to the model segment selection policy. The model segment selection policy includes a corresponding relationship between a model segment selection condition and at least one model segment stored in the UE. For example, the model segment selection condition is a location of the UE. When the UE is located within coverage of a cell A, the UE 131 selects the model segment A1. When the UE is located within coverage of a cell B, the UE 131 selects the model segment A2. When the UE is located within coverage of other cells other than the cell A and the cell B, the UE 131 selects the model segment A3. At this time, when the location of the UE is located within the coverage of the cell A, the UE 131 determines that the model segment to be executed is the model segment A11.

In S126, the UE sends an identification of the UE side model segment to the model control function.

After determining the model segment to be executed, the UE sends the identification of the UE side model segment to the model control function. For example, in FIG. 13, the UE 131 sends the identification A1 to the model control function 130. Since the model control function is the network element of the core network, a method of sending the identification of the UE side model segment to the model control function by the UE is as follows. The identification of the UE side model segment is carried in an NAS message. Then, the UE reports the identification of the UE side model segment through the NAS message to a mobility management function in the core network. The mobility management function forwards the identification of the UE side model segment to the model control function.

In S127, the model control function determines a network node side model segment.

After receiving the identification of the UE side model segment, the model control function can determine the network node side model segment according to the identification of the UE side model segment and the model segment selection condition. For example, the network node side model segment determined by the model control function 130 in FIG. 13 is the model segment B1.

In S128, the model control function sends an identification of the network node side model segment to the network node.

The network node can determine the network node side model segment according to the identification of the network node side model segment.

In the example of FIG. 12 and FIG. 13, when the UE is the first device and the network node is the second device, a model coordination scheme exemplified in FIG. 12 and FIG. 13 is that the first device determines the first model segment (i.e., the model segment A1 in FIG. 13) according to the model segment selection policy. Then, the first device sends the first identification of the first model segment to the model control function, and the model control function determines the second model segment (i.e., the model segment B1 in FIG. 13) for the second device according to the first identification and sends the second identification of the second model segment to the second device. The second device determines the second model segment according to the second identification. As such, the coordination between the model segments is realized.

In the example of FIG. 12 and FIG. 13, when the network node is the first device and the UE is the second device, a model coordination scheme exemplified in FIG. 12 and FIG. 13 is that the second device determines the second model (i.e., the model segment A1 in FIG. 13) according to the model segment selection policy. Then, the second device sends the second identification of the second model segment to the model control function, and the model control function determines the first model segment (i.e., the model segment B1 in FIG. 13) for the first device according to the second identification and sends the first identification of the first model segment to the first device. The first device determines the first model segment according to the first identification. As such, the coordination between the model segments is realized.

In the above-mentioned embodiments, the UE and the network device are used as the first device or the second device for illustration. In fact, the first device and the second device can both be UEs or network devices. Alternatively one of them is the UE, and the other is the network device. In the above embodiments, the data transmission modes between the UE and the model control function, between the UE and the base station, between the UE and the core network device are described. For example, when the model control function configures the model segment selection policy on the UE, it can send the model segment selection policy to the mobility management function first. Then, the mobility management function implements sending the model segment selection policy to the UE by carrying the model segment selection policy in the NAS message. For example, when the UE sends the identification of the model segment to the base station, it can send the identification of the model segment to the base station through the AS message. When the UE sends the identification of the model segment to the core network device, it can send the identification of the model segment to the core network device through the NAS message. Those skilled in the art can appreciate that the data transmission of the first device, the second device, and the model control function can be specifically performed by carrying, in a message, the data required to be sent, and the specific message can be determined according to the specific types of the first device and the second device. The above-mentioned embodiments are only described by taking a possible device type of each of the first device and the second device as an example. The specific data transmission can be obtained according to the actual types of the first device and the second device and is not repeated herein.

FIG. 14 illustrates a schematic flowchart of a model coordination method provided by an embodiment of the present disclosure. The method is used for a third device. FIG. 14 includes the following steps.

In S141, a first model segment is determined. The first model segment is one of at least one model segment stored in a first device. A part of functions of a preset model is realized when the first model segment is executed by the first device.

In S142, a first identification of the first model segment is sent to the first device.

In the embodiment of the present disclosure, the third device is a device different from the first device, a second device, and a model control function, and is configured to determine the first model segment for the first device. The third device can obtain a model segment selection policy from the model control function or a cloud simulation server, and then determine the first model segment for the first device according to the model segment selection policy. The model segment selection policy includes a corresponding relationship between a model segment selection condition and the at least one model segment stored in the first device.

Optionally, the model segment selection policy further includes an identification of the preset model. The third device can determine at least one model segment of the preset model from the at least one model segment stored in the first device according to the identification of the preset model, and determine the first model segment from the at least one model segment of the preset model.

After determining the first model segment, the third device sends the first identification to the first device, and the first device can determine a model segment to be executed is the first model segment according to the first identification.

Optionally, the model segment selection policy further includes an identification of the first device, and the third device can send the first identification to the first device according to the identification of the first device.

FIG. 15 illustrates a schematic flowchart of a model coordination method provided by an embodiment of the present disclosure. FIG. 15 includes the following steps.

In S151, a first model segment of a first device is determined, wherein the first model segment is one of at least one model segment stored in the first device.

In S152, a second model segment of a second device is determined. The second model segment is one of at least one model segment stored in the second device. When the first model segment is executed by the first device and the second model segment is executed by the second device, a part of or all functions of a preset model are realized.

In S153, a second identification of the second model segment is sent to the second device.

Optionally, determining the second model segment of the second device includes:
determining the second model segment according to a model segment selection policy, wherein the model segment selection policy includes a corresponding relationship between a model segment selection condition and the at least one model segment stored in the second device.

Optionally, the model segment selection policy further includes a corresponding relationship between the model segment selection policy and the at least one model segment stored in the first device. Determining the first model segment of the first device includes:
determining the first model segment according to the corresponding relationship between the model segment selection policy and the at least one model segment stored in the first device.

Optionally, determining the first model segment of the first device includes:
obtaining a first identification of the first model segment from the first device; and
determining the first model segment according to the first identification.

Optionally, the method further includes:
sending the model segment selection policy to the first device.

The method shown in FIG. 15 is a method of a model control function side. The method of the model control function side is introduced in the above-mentioned embodiments. Specific solutions can refer to the above-mentioned embodiments and are not repeated herein.

FIG. 16 illustrates a schematic structural diagram 1 of a model coordination apparatus provided by an embodiment of the present disclosure. As shown in FIG. 16, the model coordination apparatus 160 includes a determining module 161.

The determining module 161 is configured to determine a first model segment from at least one model segment stored in a first device. The first device is configured to store the at least one model segment for realizing a part of functions of a preset model. When the first model segment is executed and a second model segment is executed by a second device, a part of or all functions of the preset model are realized. The second model segment is one of at least one model segment stored in the second device. The at least one model segment stored in the second device is configured to realize a part of the functions of the preset model.

In a possible implementation manner, the determining module 161 is specifically configured to:
obtain first information; and
determine the first model segment from the at least one model segment stored in the first device according to the first information.

In a possible implementation manner, the first information includes at least one of the following information:
a model segment selection policy; and
a first identification of the first model segment model.

In a possible implementation manner, the first information includes the model segment selection policy. The determining module 161 is specifically configured to:
determine the first model segment from the at least one model segment stored in the first device according to the model segment selection policy, wherein the model segment selection policy includes a corresponding relationship between a model segment selection condition and the at least one model segment stored in the first device.

In a possible implementation manner, the model segment selection policy further includes an identification of the preset model. The determining module 161 is specifically configured to:
determine the at least one model segment of the preset model stored in the first device according to the identification of the preset model; and
determine the first model segment from the at least one model segment of the preset model stored in the first device according to the corresponding relationship between the model segment selection condition and the at least one model segment stored in the first device.

In a possible implementation manner, the determining module 161 is specifically configured to:
receive a second identification of the second model segment; and
determine the first model segment from the at least one model segment stored in the first device according to the second identification and the model segment selection policy.

In a possible implementation manner, the determining module 161 is further configured to:
determine a first identification of the first model segment; and
send the first identification to the second device or a model control function.

In a possible implementation manner, the model segment selection policy further includes a corresponding relationship between the model segment selection condition and the at least one model segment stored in the second device. The determining module 161 is further configured to:
determine the second model segment according to the corresponding relationship between the model segment selection condition and the at least one model segment stored in the second device.

In a possible implementation manner, the model segment selection policy further includes an identification of the second device. The determining module 161 is further configured to:
determine a second identification of the second model segment; and
send the second identification to the second device according to the identification of the second device.

In a possible implementation manner, the determining module 161 is further configured to:
receive the model segment selection policy from the model control function.

In a possible implementation manner, the first information includes a first identifier of the first model segment. The determining module 161 is specifically configured to:
determine the first model segment from the at least one model segment stored in the first device according to the first identification.

In a possible implementation manner, the first information comes from the second device or the model control function.

In a possible implementation manner, the first device is a first terminal device or a first network device, and the second device is a second terminal device or a second network device.

In a possible implementation manner, the first network device is a base station or a core network device, and the second network device is a base station or a core network device.

The model coordination apparatus provided by the embodiment of the present disclosure can implement the technical solutions illustrated in the above-mentioned method embodiments. The implementation principles and beneficial effects thereof are similar and not repeated herein.

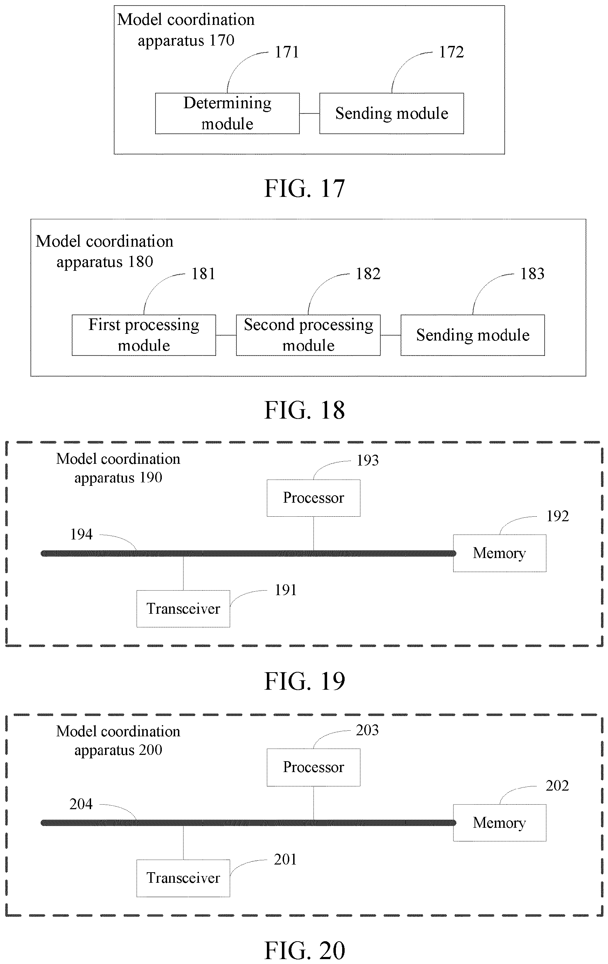

FIG. 17 illustrates a schematic structural diagram 2 of a model coordination apparatus provided by an embodiment of the present disclosure. As shown in FIG. 17, the model coordination apparatus 170 includes a determining module 171 and a sending module 172.

The determining module 171 is configured to determine a first model segment. The first model segment is one of at least one model segment stored in a first device. When the first model segment is executed by the first device, a part of functions of a preset model are realized.

The sending module 172 is configured to send a first identification of the first model segment to the first device.

In a possible implementation manner, the determining module 171 is specifically configured to:
determine the first model segment according to a model segment selection policy, wherein the model segment selection policy includes a corresponding relationship between a model segment selection condition and the at least one model segment stored in the first device.

In a possible implementation manner, the model segment selection policy further includes an identifier of the preset model. The determining module 171 is specifically configured to:
determine the at least one model segment of the preset model stored in the first device according to the identification of the preset model; and
determine the first model segment from the at least one model segment of the preset model stored in the first device according to the corresponding relationship between the model segment selection condition and the at least one model segment stored in the first device.

In a possible implementation manner, the model segment selection policy further includes an identifier of the first device. The sending module 172 is specifically configured to:
send the first identification to the first device according to the identification of the first device.

In a possible implementation manner, the determining module 171 is further configured to:
receive the model segment selection policy from a model control function.

The model coordination apparatus provided by the embodiment of the present disclosure can implement the technical solutions illustrated in the above-mentioned method embodiments. The implementation principles and beneficial effects thereof are similar and not repeated herein.

FIG. 18 illustrates a schematic structural diagram 3 of a model coordination apparatus provided by an embodiment of the present disclosure. As shown in FIG. 18, the model coordination apparatus 180 includes a first processing module 181, a second processing module 182, and a sending module 183.

The first processing module 181 is configured to determine a first model segment of a first device. The first model segment is one of at least one model segment stored in the first device.

The second processing module 182 is configured to determine a second model segment of a second device. The second model segment is one of at least one model segment stored in the second device. When the first model segment is executed by the first device and the second model segment is executed by the second device, a part of or all functions of a preset model are realized.

The sending module 183 is configured to send a second identification of the second model segment to the second device.

In a possible implementation manner, the second processing module 182 is specifically configured to:
determine the second model segment according to a model segment selection policy, wherein the model segment selection policy includes a corresponding relationship between a model segment selection condition and the at least one model segments stored in the second device.

In a possible implementation manner, the model segment selection policy further includes a corresponding relationship between the model segment selection condition and the at least one model segment stored in the first device. The first processing module 181 is specifically configured to:
determine the first model segment according to the corresponding relationship between the model segment selection condition and the at least one model segment stored in the first device.

In a possible implementation manner, the first processing module 181 is specifically configured to:
obtain a first identification of the first model segment from the first device; and
determine the first model segment according to the first identification.

In a possible implementation manner, the first processing module 181 is further configured to:
send the model segment selection policy to the first device.

The model coordination apparatus provided by the embodiment of the present disclosure can implement the technical solutions illustrated in the above-mentioned method embodiments. The implementation principles and beneficial effects thereof are similar and not repeated herein.

FIG. 19 illustrates a schematic structural diagram of a model coordination apparatus provided by an embodiment of the present disclosure. Please refer to FIG. 19. The model coordination apparatus 190 can include: a transceiver 191, a memory 192, and a processor 193. The transceiver 191 can include: a transmitter and/or a receiver. The transmitter can also be referred to as a transmitter, a transmitting port, a transmitting interface, or the like. The receiver can be referred to as a receiver, a receiving port, a receiving interface, or the like. Exemplarily, the transceiver 191, the memory 192, and the processor 193 are connected to each other through a bus 194.

The memory 192 is configured to store program instructions.

The processor 193 is configured to execute the program instructions stored in the memory to control the terminal device 190 to execute any one of the above-mentioned model coordination methods.

The receiver of the transceiver 191 can be configured to perform a receiving function of the model coordination apparatus in the above-mentioned model coordination method.

FIG. 20 illustrates a schematic structural diagram of a model coordination apparatus provided by an embodiment of the present disclosure. Please refer to FIG. 20. The model coordination apparatus 200 can include: a transceiver 201, a memory 202, and a processor 203. The transceiver 201 can include: a transmitter and/or a receiver. The transmitter can also be referred to as a transmitter, a transmitting port, a transmitting interface, or the like. The receiver can be referred to as a receiver, a receiving port, a receiving interface, or the like. Exemplarily, the transceiver 201, the memory 202, and the processor 203 are connected to each other through a bus 204.

The memory 202 is configured to store program instructions.

The processor 203 is configured to execute the program instructions stored in the memory to control the model coordination apparatus 200 to execute any one of the above-mentioned model coordination methods.

The receiver of the transceiver 201 can be configured to perform a receiving function of the model coordination apparatus in the above-mentioned model coordination method.

An embodiment of the present disclosure provides a computer-readable storage medium. Computer-executable instructions are stored in the computer-readable storage medium. The computer-executable instructions are executed by a processor to implement the above-mentioned model coordination methods.

An embodiment of the present disclosure provides a computer-readable storage medium. Computer-executable instructions are stored in the computer-readable storage medium. The computer-executable instructions are executed by a processor to implement the above-mentioned model coordination methods.

An embodiment of the present disclosure can further provide a computer program product. The computer program product can be executed by a processor to implement any of the above-mentioned model coordination methods executed by the model coordination devices.

The transmission device, the computer-readable storage medium, and the computer program product in the embodiments of the present disclosure can execute the above-mentioned model coordination methods executed by the model coordination device. The specific implementation process and beneficial effects thereof can refer to the above and are not repeated herein.

In the embodiments provided by the present disclosure, it should be appreciated that the disclosed systems, apparatus, and methods may be implemented in other ways. For example, the apparatus embodiments described above are merely illustrative. For example, the division of the unit is only a logical function division and there may be another way of division during actual implementations. For example, multiple units or components may be combined or may be integrated into another system, or some features may be ignored or not performed. In addition, coupling or communication connection between each displayed or discussed component may be direct coupling or communication connection, or may be indirect coupling or communication among devices or units via some interfaces, and may be electrical and mechanical or adopt other forms.

The units described as separate components may or may not be physically separate, the components shown as units may or may not be physical units, and namely they may be in the same place or may be distributed to multiple network elements. A part or all of the units may be selected per actual needs to achieve the purpose of the technical solutions of the embodiments.

In addition, the functional units in various embodiments of the present disclosure may be integrated in one processing unit, or each unit may be physically present, or two or more units may be integrated in one unit. The above-mentioned integrated unit may be implemented in the form of hardware or a software function unit.

It can be understood by those skilled in the art that all or a part of the various methods of the embodiments described above may be accomplished by means of a program to instruct associated hardware. The program may be stored in a computer-readable storage medium. The storage medium may include various media which may store program codes, such a ROM, a RAM, a disk, or a compact disk.

Finally, it should be noted that the above-mentioned embodiments are described to illustrate, but not limit, the technical solution of the present disclosure. Although the present disclosure is illustrated by referring to the above-mentioned embodiments, those skilled in the art should understand that, the technical solutions recorded in the above-mentioned embodiments may be modified, and some of the technical features can be replaced with equivalent features. The modifications or replacements do not drive the essence of the technical solutions to depart away from the spirit and the scope of the technical solutions of the embodiments of the present disclosure.

## Claims

1. A model coordination method, **characterized by** being for a first device, the first device storing at least one model segment, wherein the at least one model segment is configured to realize a part of functions of a preset model, and the method comprises:
determining a first model segment from the at least one model segment stored in the first device, wherein when the first model segment is executed and a second model segment is executed by a second device, a part of or all the functions of the preset model are realized, the second model segment is one of at least one model segment stored in the second device, and the at least one model segment stored in the second device is configured to realize a part of the functions of the preset model.

2. The method claim 1, **characterized in that** the determining the first model segment from the at least one model segment stored in the first device comprises:
obtaining first information; and
determining the first model segment from the at least one model segment stored in the first device according to the first information.

3. The method of claim 2, **characterized in that** the first information comprises at least one of the following information:
a model segment selection policy; and
a first identification of the first model segment model.

4. The method of claim 2 or 3, **characterized in that** the first information comprises the model segment selection policy, and the determining the first model segment from the at least one model segment stored in the first device according to the first information comprises:
determining the first model segment from the at least one model segment stored in the first device according to the model segment selection policy, wherein the model segment selection policy comprises a corresponding relationship between a model segment selection condition and the at least one model segment stored in the first device.

5. The method of claim 4, **characterized in that** the model segment selection policy further comprises an identification of the preset model, and the determining the first model segment from the at least one model segment stored in the first device according to the model segment selection policy comprises:
determining the at least one model segment of the preset model stored in the first device according to the identification of the preset model; and
determining the first model segment from the at least one model segment of the preset model stored in the first device according to the corresponding relationship between the model segment selection condition and the at least one model segment stored in the first device.

6. The method of claim 4 or 5, **characterized in that** the determining the first model segment from the at least one model segment of the preset model stored in the first device according to the model segment selection policy comprises:
receiving a second identification of the second model segment; and
determining the first model segment from the at least one model segment stored in the first device according to the second identification and the model segment selection policy.

7. The method of claim 4 or 5, **characterized in that** the method further comprises:
determining a first identification of the first model segment; and
sending the first identification to the second device or a model control function.

8. The method of claim 4 or 5, **characterized in that** the model segment selection policy further includes a corresponding relationship between the model segment selection condition and the at least one model segment stored in the second device, and the method further comprises:
determining the second model segment according to the corresponding relationship between the model segment selection condition and the at least one model segment stored in the second device.

9. The method of claim 8, **characterized in that** the model segment selection policy further comprises an identification of the second device, and the method further comprises:
determining a second identification of the second model segment; and
sending the second identification to the second device according to the identification of the second device.

10. The method of any one of claims 3-9, **characterized in that** the method further comprises:
receiving the model segment selection policy from a model control function.

11. The method of claim 2 or 3, **characterized in that** the first information comprises a first identifier of the first model segment, and the determining a first model segment from the at least one model segment stored in the first device comprises:
determine the first model segment from the at least one model segment stored in the first device according to the first identification.

12. The method of claim 11, **characterized in that** the first information comes from the second device or a model control function.

13. The method of any one of claims 1-12, **characterized in that** the first device is a first terminal device or a first network device, and the second device is a second terminal device or a second network device.

14. The method of claim 13, **characterized in that** the first network device is a base station or a core network device, and the second network device is a base station or a core network device.

15. A model coordination method, **characterized by** being for a third device the method comprising:
determining a first model segment, wherein the first model segment is one of at least one model segment stored in a first device, and a part of functions of a preset model is realized when the first model segment is executed by the first device; and
sending a first identification of the first model segment to the first device.

16. The method of claim 15, **characterized in that** the determining the first model segment comprises:
determining the first model segment according to a model segment selection policy, wherein the model segment selection policy comprises a corresponding relationship between a model segment selection condition and the at least one model segment stored in the first device.

17. The method of claim 16, **characterized in that** the model segment selection policy further comprises an identification of the preset model, and the determining the first model segment according to a model segment selection policy comprises:
determining at least one model segment of the preset model from the at least one model segment stored in the first device according to the identification of the preset model; and
determining the first model segment from the at least one model segment of the preset model stored in the first device according to the corresponding relationship between the model segment selection condition and the at least one model segment stored in the first device.

18. The method of claim 16 or 17, **characterized in that** the model segment selection policy further comprises an identification of the first device, and the sending the first identification to the first device comprises:
sending the first identification to the first device according to the identification of the first device.

19. The method of any one of claims 16-18, **characterized in that** the method further comprises:
receiving the model segment selection policy from a model control function.

20. A model coordination method, **characterized by** being for a model control function, the method comprising:
determining a first model segment of a first device, wherein the first model segment is one of at least one model segment stored in the first device;
determining a second model segment of a second device, wherein the second model segment is one of at least one model segment stored in the second device, and a part of or all functions of a preset model are realized when the first model segment is executed by the first device and the second model segment is executed by the second device; and
sending a second identification of the second model segment to the second device.

21. The method claim 20, **characterized in that** the determining the second model segment of the second device comprises:
determining the second model segment according to a model segment selection policy, wherein the model segment selection policy comprises a corresponding relationship between a model segment selection condition and the at least one model segment stored in the second device.

22. The method of claim 21, **characterized in that** the model segment selection policy further comprises a corresponding relationship between the model segment selection condition and the at least one model segment stored in the first device, and the determining the first model segment of the first device comprises:
determining the first model segment according to the corresponding relationship between the model segment selection condition and the at least one model segment stored in the first device.

23. The method of claim 21, **characterized in that** the determining the first model segment of the first device comprises:
obtaining a first identification of the first model segment from the first device; and
determining the first model segment according to the first identification.

24. The method of claim 23, **characterized in that** the method further comprises:
sending the model segment selection policy to the first device.

25. A model coordination apparatus, **characterized by** comprising:
a determining module configured to determine a first model segment from at least one model segment stored in a first device, wherein the first device is configured to store the at least one model segment for realizing a part of functions of a preset model, a part of or all functions of the preset model are realized when the first model segment is executed and a second model segment is executed by a second device, the second model segment is one of at least one model segment stored in the second device, and the at least one model segment stored in the second device is configured to realize a part of the functions of the preset model.

26. The apparatus of claim 25, **characterized in that** the determining module is specifically configured to:
obtain first information; and
determine the first model segment from the at least one model segment stored in the first device according to the first information.

27. The apparatus of claim 26, **characterized in that** the first information comprises at least one of the following information:
a model segment selection policy; and
a first identification of the first model segment model.

28. The apparatus of claim 26 or 27, **characterized in that** the first information comprises the model segment selection policy, and the determining module is specifically configured to:
determine the first model segment from the at least one model segment stored in the first device according to the model segment selection policy, wherein the model segment selection policy includes a corresponding relationship between a model segment selection condition and the at least one model segment stored in the first device.

29. The apparatus of claim 28, **characterized in that** the model segment selection policy further comprises an identification of the preset model, and the determining module is specifically configured to:
determine the at least one model segment of the preset model stored in the first device according to the identification of the preset model; and
determine the first model segment from the at least one model segment of the preset model stored in the first device according to the corresponding relationship between the model segment selection condition and the at least one model segment stored in the first device.

30. The apparatus of claim 28 or 29, **characterized in that** the determining module is specifically configured to:
receive a second identification of the second model segment; and
determine the first model segment from the at least one model segment stored in the first device according to the second identification and the model segment selection policy.

31. The apparatus of claim 28 or 29, **characterized in that** the determining module is further configured to:
determine a first identification of the first model segment; and
send the first identification to the second device or a model control function.

32. The apparatus of claim 28 or 29, **characterized in that** the model segment selection policy further comprises a corresponding relationship between the model segment selection condition and the at least one model segment stored in the second device, and the determining module is further configured to:
determine the second model segment according to the corresponding relationship between the model segment selection condition and the at least one model segment stored in the second device.

33. The apparatus of claim 32, **characterized in that** the model segment selection policy further comprises an identification of the second device, and the determining module is further configured to:
determine a second identification of the second model segment; and
send the second identification to the second device according to the identification of the second device.

34. The apparatus of any one of claims 27-33, **characterized in that** the determining module is further configured to:
receive the model segment selection policy from a model control function.

35. The apparatus of claim 26 or 27, **characterized in that** the first information comprises a first identifier of the first model segment, and the determining module is specifically configured to:
determine the first model segment from the at least one model segment stored in the first device according to the first identification.

36. The apparatus of claim 35, **characterized in that** the first information comes from the second device or a model control function.

37. The apparatus of any one of claims 25-36, **characterized in that** the first device is a first terminal device or a first network device, and the second device is a second terminal device or a second network device.

38. The apparatus of claim 37, **characterized in that** the first network device is a base station or a core network device, and the second network device is a base station or a core network device.

39. A model coordination apparatus, **characterized by** comprising:
a determining module configured to determine a first model segment, wherein the first model segment is one of at least one model segment stored in a first device, and a part of functions of a preset model are realized when the first model segment is executed by the first device; and
a sending module configured to send a first identification of the first model segment to the first device.

40. The apparatus of claim 39, **characterized in that** the determining module is specifically configured to:
determine the first model segment according to a model segment selection policy, wherein the model segment selection policy comprises a corresponding relationship between a model segment selection condition and the at least one model segment stored in the first device.

41. The apparatus of claim 40, **characterized in that** the model segment selection policy further comprises an identifier of the preset model, and the determining module is specifically configured to:
determine at least one model segment of the preset model stored in the first device according to the identification of the preset model; and
determine the first model segment from the at least one model segment of the preset model stored in the first device according to the corresponding relationship between the model segment selection condition and the at least one model segment stored in the first device.

42. The apparatus of claim 40 or 41, **characterized in that** the model segment selection policy further comprises an identifier of the first device, and the sending module is specifically configured to:
send the first identification to the first device according to the identification of the first device.

43. The apparatus of any one of claims 40-42, **characterized in that** the determining module is further configured to:
receive the model segment selection policy from a model control function.

44. A model coordination apparatus, **characterized by** comprising:
a first processing module configured to determine a first model segment of a first device, wherein the first model segment is one of at least one model segment stored in the first device;
a second processing module configured to determine a second model segment of a second device, wherein the second model segment is one of at least one model segment stored in the second device, and a part of or all functions of a preset model are realized when the first model segment is executed by the first device and the second model segment is executed by the second device; and
a sending module configured to send a second identification of the second model segment to the second device.

45. The apparatus of claim 44, **characterized in that** the second processing module is specifically configured to:
determine the second model segment according to a model segment selection policy, wherein the model segment selection policy comprises a corresponding relationship between a model segment selection condition and the at least one model segments stored in the second device.

46. The apparatus of claim 45, **characterized in that** the model segment selection policy further comprises a corresponding relationship between the model segment selection condition and the at least one model segment stored in the first device, and the first processing module is specifically configured to:
determine the first model segment according to the corresponding relationship between the model segment selection condition and the at least one model segment stored in the first device.

47. The apparatus of claim 45, **characterized in that** the first processing module is specifically configured to:
obtain a first identification of the first model segment from the first device; and
determine the first model segment according to the first identification.

48. The apparatus of claim 47, **characterized in that** the first processing module is further configured to:
send the model segment selection policy to the first device.

49. A model coordination apparatus, **characterized by** comprising: a transceiver, a memory, and a processor;
wherein the memory is configured to store program instructions; and
the processor is configured to execute the program instructions stored in the memory to control the processor to execute the model coordination method of any one of claims 1-14 or control the processor to execute the model coordination method of any one of claims 15-19.

50. A model coordination apparatus, **characterized by** comprising: a transceiver, a memory, and a processor;
wherein the memory is configured to store program instructions; and
the processor is configured to execute the program instructions stored in the memory to control the processor to execute the model coordination method of any one of claims 20-24.

51. A computer-readable storage medium, **characterized in that** computer-executable instructions are stored in the computer-readable storage medium, and the computer-executable instructions are executed by a processor to implement the model coordination method of any one of claims 1-24.
